# EUROPEAN PATENT SPECIFICATION

(11) **EP 3 079 627 B1**
(45) Date of publication and mention of the grant of the patent: **16.10.2019**
(21) Application number: 14824235.7
(22) Date of filing: 09.12.2014
(51) Int. Cl.: A61C 5/60, A61C 9/00, B29C 33/70

(54) **MOLD FOR MAKING A CONTAINER FOR DISPENSING A DENTAL PASTE**
GUSSFORM ZUR HERSTELLUNG EINES BEHÄLTERS ZUR ABGABE EINER ZAHNPASTE
MOULE POUR LA FABRICATION D'UN RÉCIPIENT POUR LA DISTRIBUTION D'UNE PÂTE DENTAIRE

(30) Priority: 13.12.2013 EP 13197091
(43) Date of publication of application: 19.10.2016
(73) Proprietor: 3M Innovative Properties Company, St. Paul, MN 55133-3427 (US)
(72) Inventor: PAUSER, Helmut, 82229 Seefeld (DE); MAURER, Andreas R., 82229 Seefeld (DE)
(74) Representative: Hohmann, Arno
(86) International application number: PCT/US2014/069211
(87) International publication number: WO 2015/089006

(56) References cited:
- EP-A1- 2 468 209
- WO-A1-2010/071939
- WO-A1-2010/123800
- US-A- 3 530 587
- US-A- 3 854 209
- US-A- 4 264 305
- US-A- 5 083 921
- US-A- 5 409 465

## Description

### Field of the Invention

The invention relates to a mold for making a container for dispensing a dental paste, and in particular to a container allowing the dispensation of a dental paste from a container outlet along with providing an airstream toward the container outlet. Described is also a method of making such a container by way of two-shot injection molding.

### Background Art

The restoration of a patient's tooth or teeth often includes the replacement of natural tooth structure by a manufactured dental restoration or dental prosthesis. Typically a tooth that is to be restored is first prepared by a dentist, for example by grinding to remove undesired tooth substance, and to provide the tooth with a shape appropriate to receive the dental restoration.

The dental restoration is typically designed to precisely fit onto the residual tooth substance on the basis of a dental impression previously taken from the prepared tooth. The dental impression should be very precise, and should represent all tooth structure required to determine the shape of the later dental restoration. In particular the dental impression should represent the transition or the "margin" between the residual tooth structure and the dental restoration. For dental restorations that extend below a patient's gingiva (or gums) the dentist also should make the part of the margin accessible for the dental impression that would normally be covered by the gingiva. The procedure of displacing the gingiva from the tooth to make the margin accessible is also known as "gingival retraction" in the field of dentistry. A common gingival retraction procedure includes the insertion of a so called retraction cord in the gingival sulcus.

A further gingival retraction procedure is based on the use of so-called gingival retraction pastes. Typically retraction pastes are very high viscosity pastes which - instead of a cord - are typically squeezed in the gingival sulcus in a patient's mouth. In one example a paste is provided which is supposed to be brought into a patient's gingival sulcus to displace the gingival tissue from a tooth. A known paste is for example available under the designation Expasyl, from the company Pierre Roland, Acteon Group, France.

Still further WO 2009/151983 A2 discloses device for use in retracting a gingiva by widening a gingival sulcus with a dental composition. The device comprises a cannula with a free end having an opening for dispensing the dental composition. The free end is shaped to be inserted with its front in the entry of the gingival sulcus, and to laterally displace the gingiva from the tooth as the cannula is moved in the gingival sulcus.

US 4,264,305 (Rasmussen et al.) describes a gun-like instrument for making dental impressions, comprising an outer air nozzle and an inner nozzle for impression material within the outer nozzle, in inner nozzle projecting beyond the tip of the outer nozzle.

Further dispensing devices for dental materials are described in EP 2 468 209 A1 (3M), WO 2010/123800 A1 (3M) and US 5,083,921 (Dragan).

WO 2010/071939 A1 (SSB Technology) describes a mold for injection molding of polymeric materials, the mold comprising at least two parts defining a cavity, the mold comprising a conduit portion, a channel for liquid polymer ingress, a core pin, and a pressure distribution means. The mold is said to be particular useful for manufacturing polymeric cannulas.

Although existing gingival retraction procedures and useful devices therefor provide certain advantages there is still a need for a procedure and a device allowing for convenient insertion of a composition for gingival retraction into the gingival sulcus. It is particularly desirable that a gingival retraction procedure can be performed in an acceptably short time, and with relatively little effort by the dentist. Further there is a need for a procedure that provides a treatment that is reliable, acceptable for a patient, and has few adverse side-effects or after-effects. It is further desirable to provide a gingival retraction device and composition that are rather inexpensive.

### Summary of the Invention

The invention relates to a mold for making a container for dispensing a dental paste as described in the claims. The container comprises at least a first chamber for storing the dental paste or a component of the dental paste. The container has a retention end allowing the container to be retained in a dispensing gun. Further the container has a dispensing end which preferably allows the dental paste to be extruded from the container to be deposited to a desired location. The first chamber opens into the dispensing end and is further configured for receiving a piston or plunger by which the dental paste can be extruded through the dispensing end. The container further comprises a through-channel extending between the retention end and the dispensing end. The through-channel allows for transmitting a gaseous medium, in particular an airstream, through the container.

The arrangement allows for providing an airstream toward an area in a patient's mouth in addition to dispensing the dental paste toward the same area. In particular the arrangement may be used in a dental retraction treatment in which the patient's sulcus is opened by the airstream right before dental paste is dispensed into the sulcus. For example the airstream may be guided to the sulcus first without dispensing dental paste, and subsequently the dispensation of dental paste may be added to further guiding the airstream to the sulcus. Therefore the container can be moved along the sulcus with the airstream opening the sulcus in advance of the dental paste reaching the opened sulcus. Further due to the airstream any liquid, like blood, saliva or medicaments, are preferably blown off (or displaced) from the sulcus before paste is received within the sulcus. This is advantageous in case a dental impression material is used for a combined dental retraction and a dental impression because the dental impression material may not be hindered by the liquid to flow deeply into the sulcus. Consequently the arrangement may also help maximizing the precision of a dental impression.

In one embodiment the dispensing end has a first outlet for the paste and a second outlet for a gas, in particular for the airstream. The first and second outlet are preferably arranged adjacent each other and face in substantially the same direction. In particular the first outlet may be formed at a front most end of the dispensing end and the second outlet maybe arranged behind the first outlet. Thus the dispensing end can be configured relatively narrow at its front most end because only the first outlet is accommodated therein and the second outlet is spaced away therefrom. Therefore the container may also allow for relatively precisely depositing the dental paste.

In a further embodiment the first chamber extends generally straight at a generally uniform cross-section. Further the through-channel may be arranged in parallel or co-axially around the first chamber.

In one embodiment the container comprises a spaced double wall having an outer wall and an inner wall which are arranged co-axially relative to each other. The through-channel may be (preferably directly) formed between the outer wall and the inner wall and the first chamber may be (preferably directly) formed by the inner wall. The outer and inner wall may be connected by at least one rib extending between the outer wall and the inner wall. The rib extends preferably generally straight parallel to the first chamber. The container may further comprise a plurality of ribs uniformly distributed around a circumference of the inner wall.

In one embodiment the container comprises a first chamber and a second chamber separated from each other by a partition wall, each of the first and the second chamber being adapted for holding a component of the dental paste. In this embodiment the dispensing end may comprise a static mixer for mixing the components as they are extruded through the dispensing end.

In a further embodiment the container comprises at least one piston arranged within the first chamber (or within the first and second chamber) for extruding the dental paste. The piston preferably is entirely accommodated within the container.

Described is also a system which comprises a container for dispensing a dental paste according to the invention and a dispensing gun for retaining the container in a receptacle of the dispensing gun. The system provides a gas supply for supplying a gas stream (in particular an airstream) into the through-channel of the container. The dispensing gun further comprises a plunger for extruding the dental paste from the container. The receptacle of the dispensing gun may comprise a gas outlet (or an outlet for the airstream). The gas outlet is preferably arranged such that the gas outlet is in fluid communication with a gas inlet of the through-channel of the container inserted in the receptacle. Further the dispensing gun may have a connector for connecting the dispensing gun to a dental chair, for example to the air supply of a dental chair. The connector is further preferably adapted to at least connect the gas outlet with a gas or air supply of the dental chair. The system preferably further has a seal, for example one or two O-rings, for sealing the connector between the dispensing gun and the container.

The invention relates to a mold for making a container of the invention.

The container comprises:
- at least a first chamber for storing the dental paste, the container having a retention end allowing the container to be retained in a dispensing gun and a dispensing end, the first chamber opening into the dispensing end and being further configured for receiving a piston or plunger by which the dental paste can be extruded through the dispensing end, wherein the container further comprises a through-channel extending between the retention end and the dispensing end.

The mold comprises:
- a first mold core for molding a chamber of the container,
- a second mold core for molding a first portion of the through-channel,
- a third mold core for molding a nozzle of the container, and
   a fourth mold core for molding a second portion of the through-channel, with the first and second portions being directly connected to each other.

### Brief Description of the Figures

- Fig. 1: is a perspective view of a first embodiment of a container;

- Fig. 2: is a perspective enlarged view of a portion of the container shown in Fig. 1;
- Fig. 3: is a perspective cross-sectional view of a dispensing gun and a ntainer;
- Fig. 4A: is a perspective view of a second embodiment of a container;
- Fig. 4B: is a partial cross-sectional view as indicated in Fig. 4A;
- Fig. 5: is a perspective view of a further container; and
- Fig. 6: is a cross-sectional view of a mold for making a container according to the invention.

### Detailed Description of the Invention

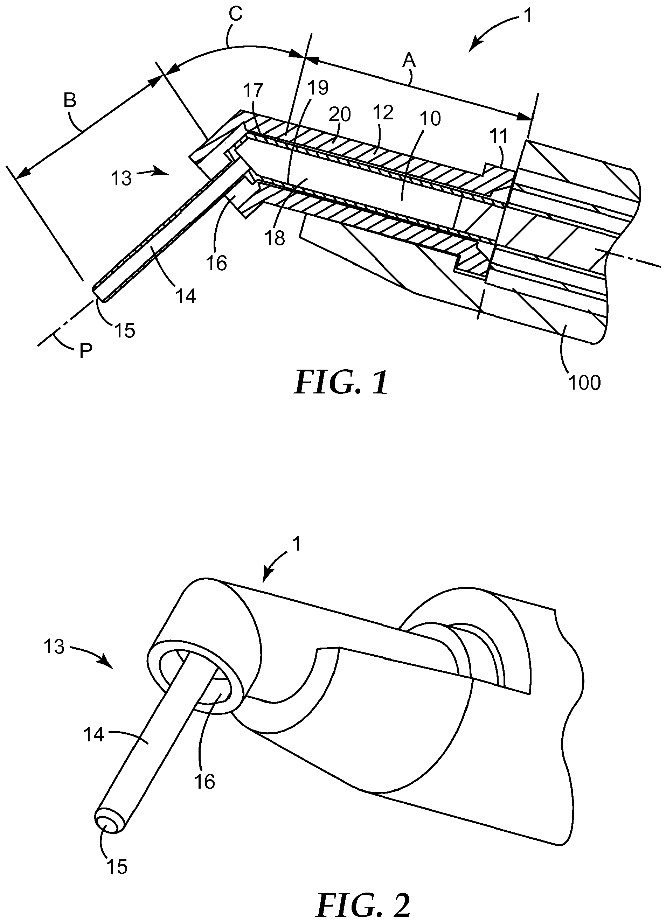

Fig. 1 shows a container 1 for dispensing a dental paste. The container 1 comprises a chamber 10 for storing the dental paste. At a rear end the container 1 has a retention end 11 by which in the example the container 1 is retained in a dispensing gun 100. The retention end 11 of the container has an annular bulge which extends radially from a cylindrical body 12 of the container 1.

The container has at a front end a dispensing end 13 from which the dental paste can be extruded. In particular the dispensing end 13 comprises a nozzle 14 which forms a first outlet 15 for the paste. Further the dispensing end 13 comprises a second outlet 16 for a gaseous medium, in particular for an airstream. The second outlet 16 is in fluid communication with through-channel 17 extending through the container 1 between the retention end 11 and the dispensing end 13. The skilled person will recognize that although, as shown, the through-channel on one side may extend from the outermost end of the retention end 11, in another example the channel may originate at a location further toward the dispensing end 13.

In the example the container 1 extends along a dispensing path P which is bent or curved. The dispensing path P has first longitudinal or straight section A, a second longitudinal or straight section B and a curved section C connecting with the sections A and B. The chamber 10 extends along the section A at a generally uniform cross-section and thus is configured for receiving a piston or plunger which is movable along section A of the dispensing path P for extruding the dental paste through the dispensing end. As illustrated the chamber 10 opens into the dispensing end 13, and in particular is in fluid communication with the first outlet 15. The chamber 10 particularly is formed by a section of a passageway 18 through the container 1 which narrows in cross-section from the retention end 11 toward the first outlet 15. Accordingly the wider section of the passageway 18 adjacent the retention end 11 provides a capacity for storing a desired amount of dental paste, whereas the narrower section of the passageway 18 opening into the first opening 15 allows for precise deposition of the dental paste extruded from the container 1.

The through-channel 17 further preferably extends generally parallel to the paste passageway 18 and in particular co-axially to the paste passageway 18. The through channel 17 formed between a double-wall of the body 12, in particular between an inner wall 19 and an outer wall 20 of the body 12, and the paste passageway 18 is formed by an inner wall 19. As an advantage the dental paste can be tempered by an airstream provided through the through-channel 17. For example a user of the container 1 may over a certain time period provide an airstream through the through-channel for tempering, for example for warming up the dental paste.

Fig. 2 shows the dispensing end 13 of the container 1 in more detail. The first outlet 15 is formed at a front most end of the dispensing end 13. The second outlet 16 is offset from the first outlet 15 behind the front most end. Thus the second wall 20 forming part of the second outlet 16 does not increase the size of the nozzle 14 at the front most end. Therefore the container 1 allows for precise deposition of the dental paste but further also allows for guiding an airstream toward the first outlet 15.

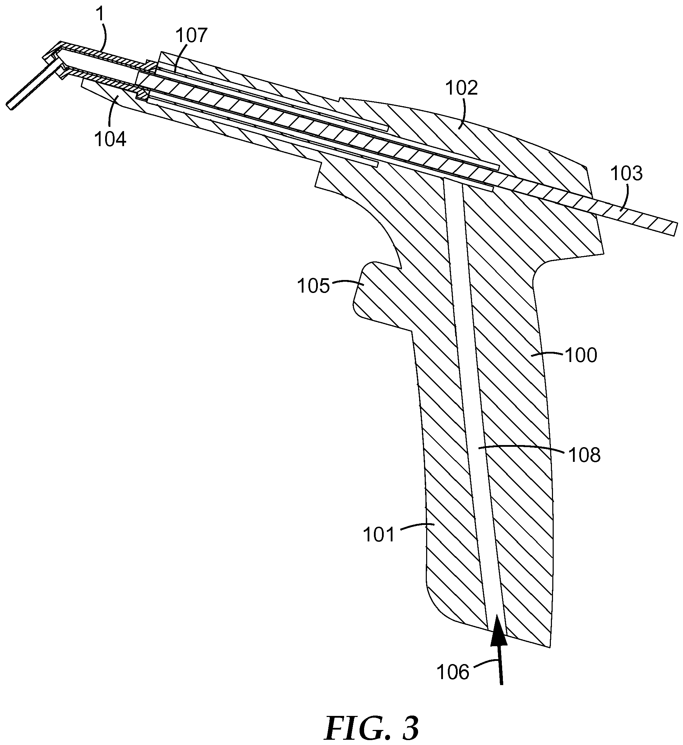

Fig. 3 shows a dispensing gun 100 having a handle portion 101 and pushing unit 102. The pushing unit 102 comprises a plunger 103 which is movable toward a receptacle 104 within which the container 1 according to the invention can be retained. The dispensing gun 100 may be configured for moving the plunger by aid of the motor of pneumatically, at least in one direction for extruding dental paste from the container 1. However the dispensing gun 100 may further be hand operated. In the example the dispensing gun 100 is driven pneumatically and an actuator knob 105 is provided for switching the drive on or off. For example an operator of the dispensing gun 100 may push the actuator knob 105 for causing the plunger 103 to be urged by pneumatic power toward the receptacle 104, or release the actuator knob 105 to stop the plunger 103 to be urged forward. The dispensing gun 100 may be configured such that in the released stage of the actuator knob 105 the plunger is retracted automatically, or such that the plunger can be retracted manually. Although not illustrated the container 1 may have a piston that closes the chamber, and that piston may be pushed forward by the plunger 103 of the dispensing gun 100.

The dispensing gun 100 further has a duct 108 extending between an inlet 106 and an outlet 107 formed within the dispensing gun 100. The dispensing gun 100 is thus adapted to guide a gaseous medium, preferably an airstream, from a gas or air supply (for example a dentist's chair) into the through-channel of the container 17. The outlet 107 of the dispensing gun 100 is preferably sized and positioned such that an inlet of the through-channel of the container appropriately retained within the dispensing gun 100 is in fluid communication with the outlet 17. Further a seal (not shown) may be arranged between the container 1 and the dispensing gun 100 to avoid leakage of the airstream at the interface between the container 1 and the dispensing gun 100.

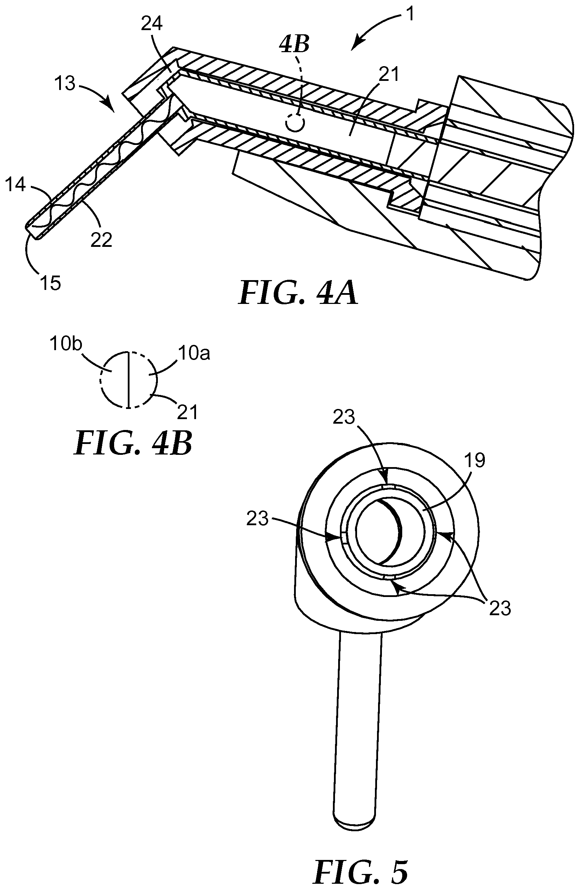

Fig. 4 shows a container 1 which is identical to the container 1 shown in Figures 1 to 3, except that the container 1 is configured for storing two components and for dispensing a dental paste mixed from those two components. Accordingly the container 1 may have two chambers 10a, 10b. In the example the two chambers are separated by a middle wall from each other, as indicated by the cross-section 21 through the chambers 10a, 10b. The two chambers 10a, 10b merge into a common passageway 24 extending through the nozzle 14 of the container and opening in the first opening 15. A static mixer 22 is arranged within the passageway 24 for mixing the two-components as they are extruded through the dispensing end 13.

Fig. 5 shows a plurality of ribs 23 which connect the inner wall 19 and the outer wall 20 of the container 1 with each other. Such ribs may be used for the two-component container shown in Fig. 4 and for the container for a single paste shown in Figures 1-3. The skilled person will recognize that although four ribs are shown, the container 1 may comprise only one, two or three ribs, of more than 4 ribs as long as the double-wall configuration is sufficiently stable during handling and use of the container.

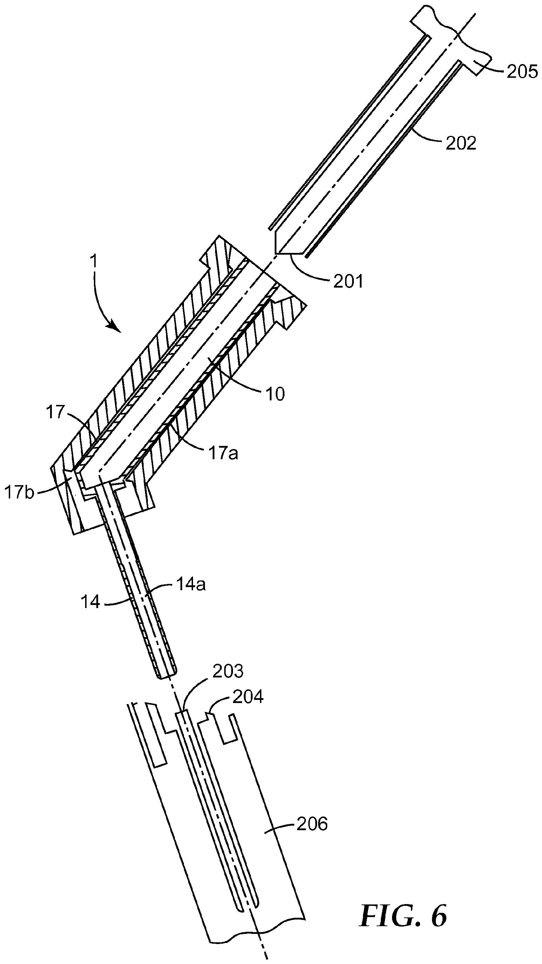

Fig. 6 shows parts of a mold 200 according to the invention for making a container 1. In particular the mold 200 has a first mold core 201 for molding a chamber 10 of the container 1, a second mold core 202 for molding a first portion 17a of the through-channel 17, a third mold core 203 for molding the nozzle 14 (in particular the passageway 14a in the nozzle 14) of the container 1, and a fourth mold core 204 for molding a second portion 17b of the through-channel 17. During molding the container, the mold cores 201, 202, 203, 204 are positioned such that the first mold core 201 and the third mold core 203 touch each other at their free ends. Accordingly the mold cores 201, 203 provide for the chamber 10 and the passageway 14a in nozzle to be in fluid communication with each other. Further during molding the container, the second mold core 202 and the fourth mold core 204 touch each other at their free ends. Accordingly the mold cores 202, 204 provide for the first and second portion 17a, 17b of the through-channel 17 to be in fluid communication with each other. The first and second mold core 201, 202 may be part of a first common mold core 205 which is movable within the mold 200, and the third and fourth mold core 203, 204 may be part of a second common mold core 206 which is movable within the mold 200.

A mold as described is preferably further adapted for injection molding the container 1 from a thermoplastic polymer, like for example polyethylene, polypropylene, polyamide, polyoxymethylene, polyethylene terephthalate. Overall the mold 200 is preferably configured for injection molding the container 1 of the invention in a single shot. The mold may therefore have a mold gate through which molten polymer may be urged into the mold. And the mold preferably has several movable mold parts which can be positioned relative to each other for shaping all outer and inner structures of the container at once. The mold further preferably has mold parts, which are separable to allow a molded container to be removed after molding. The mold is further preferably adapted such that the first and second common mold cores 205, 206 (or the mold cores 201, 202, 203, 204) can be retracted from a container after molding. Thus the mold of the invention allow for manufacturing the container of the invention at minimized efforts and costs.

## Claims

1. A mold for making a container (1) for dispensing a dental paste, the container (1) comprising at least a first chamber (10) for storing the dental paste, the container having a retention end (11) allowing the container (1) to be retained in a dispensing gun (100) and a dispensing end (13), the first chamber (10) opening into the dispensing end (13) and being further configured for receiving a piston or plunger (103) by which the dental paste can be extruded through the dispensing end (13), wherein the container (1) further comprises a through-channel (17) for transmitting a gaseous medium, in particular an airstream, through the container (1) and extending between the retention end (11) and the dispensing end (13), the mold comprising a first mold core (201) for molding the chamber (10) of the container (1), a second mold core (202) for molding a first portion (17a) of the through-channel (17), a third mold core (203) for molding a nozzle (14) of the container, and a fourth mold core (204) for molding a second portion (17b) of the through-channel (17), with the first and second portions being directly connected to each other.

2. The mold of claim 1, wherein the dispensing end (13) of the container (1) has a first outlet (15) for the paste and a second outlet (16) for a gas.

3. The mold of claim 2, wherein the first and second outlet (15, 16) of the container (1) are arranged adjacent each other and face in substantially the same direction.

4. The mold of claim 2 or 3, wherein the first outlet (15) of the container (1) is formed at a front most end of the dispensing end (13) and the second outlet (16) of the container (1) is arranged behind the first outlet (15).

5. The mold of any of the preceding claims, wherein the first chamber (10) of the container (1) extends generally straight at a generally uniform cross-section, and wherein the through-channel (17) of the container (1) is arranged co-axially around the first chamber.

6. The mold of any of the preceding claims, wherein the container (1) comprises a spaced double wall having an outer wall (20) and an inner wall (19) which are arranged co-axially relative to each other, and wherein the through-channel (17) is formed between the outer wall (20) and the inner wall (19) and the first chamber (10) is formed by the inner wall (19), and wherein the outer and inner wall are connected by at least one rib (23) between the outer wall and the inner wall.

7. The mold of claim 6, wherein the rib (23) of the container (1) extends generally straight parallel to the first chamber (10).

8. The mold of claim 7, wherein the container (1) comprises a plurality of ribs (23) uniformly distributed around a circumference of the inner wall (19).

9. The mold of any of the preceding claims, wherein the container (1) further comprises a second chamber, the first and second chamber being separated from each other by a partition wall, and each of the first and the second chamber being adapted for holding a component of the dental paste.

10. The mold of claim 9, wherein the dispensing end (13) of the container (1) comprises a static mixer (22) for mixing the components as they are extruded through the dispensing end (13).

11. The mold of any of the preceding claims, wherein the container (1) comprises at least one piston (103) arranged within the chamber (10) for extruding the dental paste.

## Patentansprüche

1. Eine Form zum Herstellen eines Behälters (1) zum Abgeben einer Dentalpaste, wobei der Behälter (1) zumindest eine erste Kammer (10) zum Speichern der Dentalpaste umfasst, wobei der Behälter ein Halteende (11), das ermöglicht, dass der Behälter (1) in einer Ausgabepistole (100) gehalten wird, und ein Abgabeende (13) aufweist, wobei die erste Kammer (10) sich in das Abgabeende (13) öffnet und ferner dazu ausgelegt ist, einen Kolben oder Stempel (103) aufzunehmen, über den die Dentalpaste durch das Abgabeende (13) extrudiert werden kann, wobei der Behälter (1) ferner einen Durchgangskanal (17) zum Übertragen eines gasförmigen Mediums, insbesondere eines Luftstroms, durch den Behälter (1) umfasst und sich zwischen dem Halteende (11) und dem Ausgabeende (13) erstreckt, wobei die Form einen ersten Formkern (201) zum Formen der Kammer (10) des Behälters (1), einen zweiten Formkern (202) zum Formen eines ersten Abschnitts (17a) des Durchgangskanals (17), einen dritten Formkern (203) zum Formen einer Düse (14) des Behälters und einen vierten Formkern (204) zum Formen eines zweiten Abschnitts (17b) des Durchgangskanals (17) umfasst, wobei der erste und der zweite Abschnitt direkt miteinander verbunden sind.

2. Die Form nach Anspruch 1, wobei das Abgabeende (13) des Behälters (1) einen ersten Auslass (15) für die Paste und einen zweiten Auslass (16) für ein Gas aufweist.

3. Die Form nach Anspruch 2, wobei der erste und der zweite Auslass (15, 16) des Behälters (1) nebeneinander angeordnet sind und im Wesentlichen in dieselbe Richtung gewandt sind.

4. Die Form nach Anspruch 2 oder 3, wobei der erste Auslass (15) des Behälters (1) an einem vordersten Ende des Abgabeendes (13) ausgebildet ist und der zweite Auslass (16) des Behälters (1) hinter dem ersten Auslass (15) angeordnet ist.

5. Die Form nach einem der vorstehenden Ansprüche, wobei sich die erste Kammer (10) des Behälters (1) im Allgemeinen gerade in einem im Allgemeinen gleichmäßigen Querschnitt erstreckt und wobei der Durchgangskanal (17) des Behälters (1) koaxial um die erste Kammer angeordnet ist.

6. Die Form nach einem der vorstehenden Ansprüche, wobei der Behälter (1) eine beabstandete Doppelwand mit einer Außenwand (20) und einer Innenwand (19) umfasst, die koaxial zueinander angeordnet sind, und wobei der Durchgangskanal (17) zwischen der Außenwand (20) und der Innenwand (19) ausgebildet ist und die erste Kammer (10) durch die Innenwand (19) ausgebildet ist und wobei die Außen- und die Innenwand über mindestens eine Rippe (23) zwischen der Außenwand und der Innenwand verbunden sind.

7. Die Form nach Anspruch 6, wobei sich die Rippe (23) des Behälters (1) im Allgemeinen gerade parallel zu der ersten Kammer (10) erstreckt.

8. Die Form nach Anspruch 7, wobei der Behälter (1) eine Vielzahl von Rippen (23) umfasst, die gleichmäßig um einen Umfang der Innenwand (19) verteilt sind.

9. Die Form nach einem der vorstehenden Ansprüche, wobei der Behälter (1) ferner eine zweite Kammer umfasst, wobei die erste und die zweite Kammer voneinander durch eine Trennwand getrennt sind und wobei jede von der ersten und der zweiten Kammer zum Bereithalten eines Bestandteils der Dentalpaste ausgestaltet ist.

10. Die Form nach Anspruch 9, wobei das Abgabeende (13) des Behälters (1) einen statischen Mischer (22) zum Mischen der Bestandteile umfasst, während sie durch das Abgabeende (13) extrudiert werden.

11. Die Form nach einem der vorstehenden Ansprüche, wobei der Behälter (1) mindestens einen Kolben (103) zum Extrudieren der Dentalpaste umfasst, der in der Kammer (10) angeordnet ist.

## Revendications

1. Moule pour fabriquer un récipient (1) destiné à distribuer une pâte dentaire, le récipient (1) comprenant au moins une première chambre (10) pour un stockage de la pâte dentaire, le récipient possédant une extrémité de retenue (11) permettant au récipient (1) d'être retenu dans un pistolet distributeur (100) et une extrémité de distribution (13), la première chambre (10) s'ouvrant dans l'extrémité de distribution (13) et étant en outre conçu pour recevoir un piston ou un mécanisme coulissant (103) au moyen duquel la pâte dentaire peut être extrudée à travers l'extrémité de distribution (13), dans lequel le récipient (1) comprend en outre un canal de passage (17) pour transmettre un milieu gazeux, en particulier un flux d'air, à travers le récipient (1) et s'étendant entre l'extrémité de rétention (11) et l'extrémité de distribution (13), le moule comprenant un premier noyau de moule (201) pour mouler la chambre (10) du récipient (1), un deuxième noyau de moule (202) pour mouler une première partie (17a) du canal de passage (17), un troisième noyau de moule (203) pour mouler une buse (14) du récipient, et un quatrième noyau de moule (204) pour mouler une seconde partie (17b) du canal de passage (17), avec les première et seconde parties étant directement connectées l'une à l'autre.

2. Moule selon la revendication 1, dans lequel l'extrémité de distribution (13) du récipient (1) a une première sortie (15) pour la pâte et une seconde sortie (16) pour un gaz.

3. Moule selon la revendication 2, dans lequel les première et seconde sorties (15, 16) du récipient (1) sont agencées adjacentes l'une à l'autre et orientées sensiblement dans la même direction.

4. Moule selon la revendication 2 ou 3, dans lequel la première sortie (15) du récipient (1) est formée à une extrémité la plus avant de l'extrémité de distribution (13) et la seconde sortie (16) du récipient (1) est disposée derrière la première sortie (15).

5. Moule selon l'une quelconque des revendications précédentes, dans lequel la première chambre (10) du récipient (1) s'étend généralement de manière rectiligne au niveau d'une section transversale généralement uniforme, et dans lequel le canal de passage (17) du récipient (1) est disposé de manière coaxiale autour de la première chambre.

6. Moule selon l'une quelconque des revendications précédentes, dans lequel le récipient (1) comprend une double paroi espacée ayant une paroi externe (20) et une paroi interne (19) qui sont disposées de manière coaxiale l'une par rapport à l'autre, et dans lequel le canal de passage (17) est formé entre la paroi externe (20) et la paroi interne (19) et la première chambre (10) est formée par la paroi interne (19), et dans lequel les parois externe et interne sont reliées par au moins une nervure (23) entre la paroi externe et la paroi interne.

7. Moule selon la revendication 6, dans lequel la nervure (23) du récipient (1) s'étend généralement de manière linéaire parallèle à la première chambre (10).

8. Moule selon la revendication 7, dans lequel le récipient (1) comprend une pluralité de nervures (23) réparties uniformément autour d'une circonférence de la paroi interne (19).

9. Moule selon l'une quelconque des revendications précédentes, dans lequel le récipient (1) comprend en outre une seconde chambre, les première et seconde chambres étant séparées l'une de l'autre par une paroi de séparation, et chacune des première et seconde chambres étant adaptée pour contenir un composant de la pâte dentaire.

10. Moule selon la revendication 9, dans lequel l'extrémité de distribution (13) du récipient (1) comprend un mélangeur statique (22) pour mélanger les composants lorsqu'ils sont extrudés à travers l'extrémité de distribution (13).

11. Moule selon l'une quelconque des revendications précédentes, dans lequel le récipient (1) comprend au moins un piston (103) disposé à l'intérieur de la chambre (10) pour extruder la pâte dentaire.
